# EUROPÄISCHE PATENTSCHRIFT

(11) **EP 1 655 465 B1**
(45) Veröffentlichungstag und Bekanntmachung des Hinweises auf die Patenterteilung: **29.12.2010**
(21) Anmeldenummer: 05107839.2
(22) Anmeldetag: 26.08.2005
(51) Int. Cl.: F02B 37/16

(54) **Schubumluftventil für Turbolader-Brennkraftmaschinen**
Valve for ambiant air of a turbocharger for combustion engine
Soupape à air ambiant pour un turbocompresseur d'un moteur à combustion interne

(30) Priorität: 04.11.2004 DE 102004053849
(43) Veröffentlichungstag der Anmeldung: 10.05.2006
(73) Patentinhaber: ROBERT BOSCH GMBH, 70442 Stuttgart (DE)
(72) Erfinder: Baeuerle, Michael, 71254 Ditzingen-Heimerdingen (DE)

(56) Entgegenhaltungen:
- EP-A- 0 068 517
- DE-A1- 10 251 981
- DE-A1- 19 637 055
- FR-A- 1 136 830
- JP-A- 5 215 269
- JP-U- 57 013 836
- JP-U- 59 027 134

## Beschreibung

### Stand der Technik

Die Erfindung betrifft ein Schubumluftventil für Turbolader-Brennkraftmaschinen mit den Merkmalen des Oberbegriffs des unabhängigen Anspruchs 1.

Ein derartiges Schubumluftventil ist beispielsweise aus der DE 100 20 041 A1 bekannt und wird in Kraftfahrzeugen mit einem Abgasturbolader eingesetzt, um den Luftstrom durch einen Bypasskanal zwischen der Ansausseite und der Druckseite eines Verdichters des Turboladers zu steuern. Wird eine in der Ansaugleitung befindliche Drosselklappe im Betrieb des Kraftfahrzeuges geschlossen, so wird mittels des Schubumluftventils die Ansaugseite mit der Druckseite des Verdichters verbunden, um so einen nachteiligen Druckanstieg und Pulsationen in der Ansaugleitung zu verhindern. Hierzu wird in dem Schubumluftventil eine auf einen mit einem Ventilschließglied versehenen Ventilkopf einwirkende Ventilstange mit einer elektromagnetischen Stelleinheit betätigt. Damit die Bewegung des Ventilschließgliedes des Schubumluftventils nicht durch eine Druckdifferenz zwischen Ansaugseite und Druckseite behindert wird, weist das bekannte Schubumluftventil Druckausgleichsbohrungen im Ventilkopf und in der Ventilstange auf Über die Druckausgleichsbohrungen findet ein Druckausgleich zwischen dem druckseitigen Anschluss und einem Magnetraum auf einer von dem Ventilkopf abgewandten Rückseite der Ventilstange statt, so dass das Ansprechverhalten des Schubumluftventils verbessert wird.

J59027134U offenbart ein Schubumluftventil für einen Abgasturbolader, das eine der Druckseite zugewandte Stirnseite des Ventilkopfes ein Podest aufweist und dass der wenigstens eine Druckausgleichskanal sich durch das Podest hindurch zur Druckseite hin öffnet.

Nachteilig bei den bekannten Schubumluftventilen ist, dass Motoröl, welches beispielsweise über die Kurbelgehäuseentlüftung in die Ansaugleitung der Brennkraftmaschine gelangt, über den druckseitigen Anschluss des Schubumluftventils in die Druckausgleichsbohrungen eindringen und von dort bis auf die Rückseite der Ventilstange gelangen kann. Dort kann das abgelagerte Motoröl die Bewegung der Ventilstange beim Öffnen und Schließen des Schubumluftventils behindern, wenn die Ventilstange auf das nicht kompressible Ölpolster trifft. Dies gilt insbesondere bei einer Einbaulage des Schubumluftventils, in der die Druckausgleichsbohrungen in der Ventilstange parallel zur Schwerkraft verlaufen, so dass sich sehr schnell ein Ölpolster zwischen Ventilstange und Magnetkern bildet.

Aufgabe der Erfindung ist es, ein Schubumluftventil zu schaffen, welches die bekannten Nachteile vermeidet und trotz eines Druckausgleichs auf beiden Seiten des Ventilschießgliedes die Entstehung eines Ölpolsters im Elektromagneten verhindert. Diese Aufgabe wird durch ein Schubumluftventil mit den Merkmalen des Anspruchs 1 der Anmeldung gelöst.

### Vorteile der Erfindung

Das erfindungsgemäße Schubumluftventil mit den kennzeichnenden Merkmalen des Anspruchs 1 verhindert, dass Motoröl und andere Verunreinigungen entlang von Druckausgleichskanälen in den Ventilraum gelangen. Dadurch, dass die der Druckseite zugewandte Stirnseite des Ventilkopfes mit einem zur Druckseite hin vorstehenden Podest versehen ist und dass der wenigstens eine Druckausgleichskanal sich durch das Podest hindurch zur Druckseite hin öffnet, wird erreicht, dass sich im geschlossenen Zustand des Schubumluftventils das Motoröl um das Podest herum auf der Stirnseite des Ventilkopfes ablagert, ohne in den durch das Podest geschützten Druckausgleichskanal eindringen zu können. Es sind daher vorteilhaft auch nach zahlreichen Betriebsstunden keine erhöhten Stellkräfte für die Bewegung der Ventilstange erforderlich, so dass ein schnelles Ansprechverhalten des Schubumluftventils dauerhaft erhalten bleibt.

Weiterbildungen der Erfindung und vorteilhafte Ausführungsbeispiele werden durch die Merkmale der abhängigen Ansprüchen ermöglicht. Dadurch, dass ein das Podest umgebender Bereich der Stirnseite des Ventilkopfes zwischen dem wenigstens einen Podest und einer Dichtlippe des Ventilschließgliedes als Aufnahme für Ölablagerungen vorgesehen ist, wird vorteilhaft erreicht, dass beim Öffnen des Schubumluftventils das in der Aufnahme angesammelte Motoröl durch den Luftstrom ausgespült werden kann. Das Volumen der Aufnahme und die Höhe des Podestes kann dabei vorteilhaft an die Öffnungsfrequenz des Schubumluftventils angepasst werden, damit sich nicht zu viel Motoröl in der Aufnahme ansammelt.

Das Ventilschließglied kann vorteilhaft durch eine Membran gebildet werden, die mit ihrem einen Ende zwischen einem Gehäuseteil und einem den ansaugseitigen Anschluss und druckseitigen Anschluss aufweisenden Ventilteil des Schubumluftventils und mit ihrem anderen Ende an dem Ventilkopf festgelegt ist. Besonders vorteilhaft ist es, wenn sich der wenigstens eine Druckausgleichskanal von einer in dem Podest angeordneten druckseitigen Öffnung bis zu einer Öffnung in einem zwischen dem Ventilschließglied und der Stelleinheit angeordneten Ventilraum erstreckt. Hierdurch wird ein Druckausgleich der Membran auch ohne Druckausgleichsbohrungen in der Ventilstange erreicht.

In einem Ausführungsbeispiel ist vorgesehen, dass die Stelleinheit eine Magnetspule, die auf einen mit der Ventilstange verbundenen oder einstückig mit der Ventilstange ausgebildeten, beweglichen Magnetanker einwirkt, und einen ortsfesten Magnetkern aufweist. Es ist dann vorteilhaft, den Ventilraum durch ein Dichtungselement gegenüber einem auf der von der Ventilstange abgewandten und dem Magnetkern zugewandten Seite des Magnetankers angeordneten Ankerraum abzudichten. Sollte Motoröl trotz des Podestes am Ventilkopf über die Druckausgleichskanäle in den Ventilraum eindringen, so kann es von dort nicht in den Ankerraum gelangen. Der Magnetanker kann in einer von der Magnetspule umgebenen Hülse verschiebbar gelagert werden. Das Dichtungselement kann durch einen zwischen Hülse und Magnetanker oder zwischen Spulenkörper und Magnetanker eingesetzten Dichtungsring oder weitere Membran oder in anderer Weise gebildet werden.

Da auf der von dem Ventilteil abgewandte Seite des Magnetankers aufgrund der fehlenden Druckausgleichsbohrung in der Ventilstange beziehungsweise dem Magnetanker kein Druckausgleich stattfindet, ist es vorteilhaft, wenn das Ventilschließglied so dimensioniert wird, dass die durch die Dichtlippe des Ventilschließgliedes begrenzte Fläche A2, die Querschnittsfläche A3 des Magnetankers in einer Querschnittsebene senkrecht zur Bewegungsrichtung des Magnetankers und die von dem Druck in dem Ventilraum auf der von dem druckseitigen Anschluss abgewandten Seite beaufschlagte Querschnittsfläche A1 des Ventilschließgliedes bis auf Fertigungstoleranzen die Bedingung A2 = A1 - A3 erfüllen.

Weiterhin ist vorteilhaft, wenn der Magnetanker und/oder die Ventilstange mit einem Führungsstift fest verbunden ist, der in einer Ausnehmung des Magnetkerns verschiebbar gelagert ist.

### Zeichnungen

Ausführungsbeispiele der Erfindung sind in den Zeichnungen dargestellt und werden in der nachfolgenden Beschreibung erläutert. Es zeigt
Fig. 1 einen in einem Kraftfahrzeug eingebauten Abgasturbolader mit Schubumluftventil,
Fig. 2 einen Querschnitt durch das erfindungsgemäße Schubumluftventil,
Fig. 3 eine vergrößerte Detaildarstellung aus Fig. 2.

### Beschreibung eines Ausführungsbeispiels

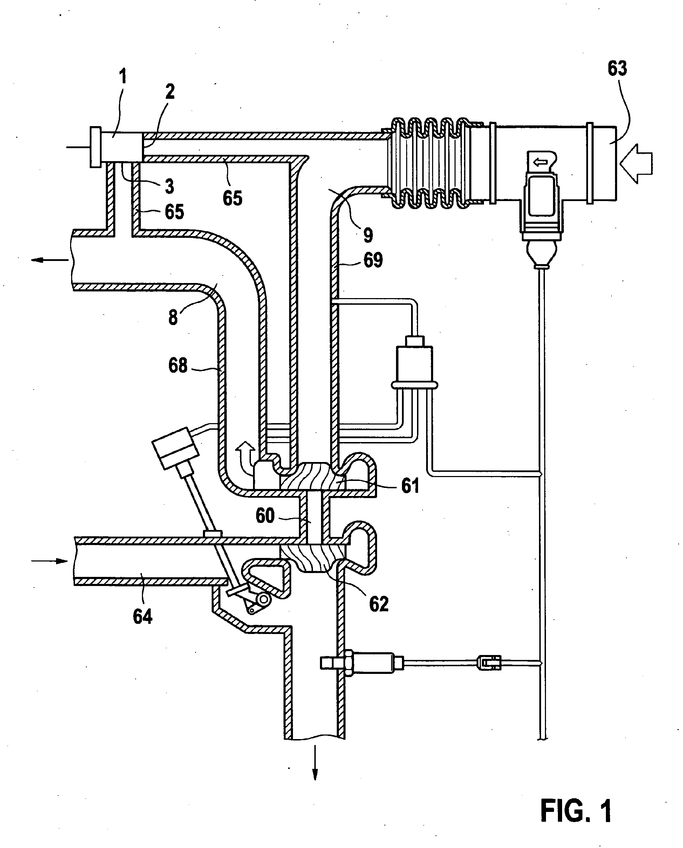

Fig. 1 zeigt einen Teil des Ansaugtraktes und Abgastraktes einer Brennkraftmaschine eines Kraftfahrzeuges. Über einen Lufteintritt 63, dem beispielsweise ein Luftmengendurchflussmesser zugeordnet ist, gelangt Luft auf der Ansaugseite 9 in eine Ansaugleitung 69 und von dort aus zu einem Verdichter 61 eines Abgasturboladers 60, der von einer in die Abgasleitung 64 der Brennkraftmaschine eingesetzten Turbine 62 angetrieben wird. An den Verdichter 61 schließt sich auf der Druckseite 8 eine weitere Leitung 68 an, über welche die verdichtete Luft zur nicht dargestellten Brennkraftmaschine gepumpt wird. In der Leitung 68 ist eine nicht dargestellte Drosselklappe angeordnet. Um bei geschlossener Drosselklappe einen nachteiligen Druckanstieg und Pulsationen in der Leitung 68 zu verhindern, ist ein Bypasskanal 65 vorgesehen, über den die Ansaugseite 9 mit der Druckseite 8 verbindbar ist. Der Luftstrom durch den Bypasskanal 65 wird von einem elektrisch betätigbaren Schubumluftventil 1 gesteuert, das einen ansaugseitigen Anschluss 2 und einen druckseitigen Anschluss 3 aufweist. Bei geschlossener Drosselklappe öffnet das Schubumluftventil 1, so dass verdichtete Luft von der Druckseite 8 über den Bypasskanal 65 zur Ansaugseite 9 zurückströmt.

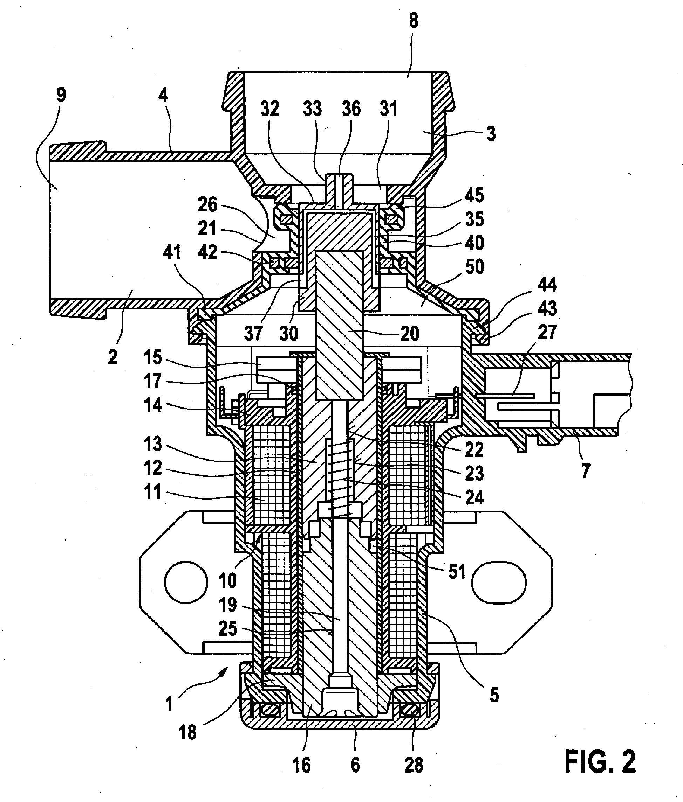

Ein Ausführungsbeispiels des erfindungsgemäßen Schubumluftventils 1 ist in Fig. 2 dargestellt. Das Schubumluftventil 1 weist einen Gehäuseteil 5 und einen Ventilteil 4 auf, an dem ein ansaugseitiger Anschluss 2 und ein druckseitiger Anschluss 3 ausgebildet ist. Der ansaugseitige Anschluss 2 ist über eine Öffnung 21 mit einer taschenartigen Ausnehmung 26 verbunden, in der ein beweglicher Ventilkopf 30 angeordnet ist. Der Ventilkopf 30 ist mit einem Stützgerüst 42 verbunden, an dem ein Ventilschließglied 40 befestigt ist. Das Ventilschließglied 40 ist als elastisch verformbare Membran ausgebildet, die mit dem Stützgerüst 42 ein integrales Bauteil bildet, so dass die Membran mit ihrem einen Ende an dem Ventilkopf 30 befestigt ist. Das von dem Ventilkopf 30 abgewandte andere Ende der Membran 40 ist mit einem umlaufenden Kragen 41 versehen, der zwischen dem Ventilteil 4 und dem Gehäuseteil 5 des Schubumluftventils eingespannt gehalten ist. Das Ventilteil 4 ist mit Rastnasen 43 an Vorsprüngen 44 des Gehäuseteils 5 befestigt.

In dem Gehäuseteil 5 ist eine Stelleinheit 10 angeordnet, mit welcher der Ventilkopf bewegbar ist. Die Stelleinheit 10 ist in diesem Ausführungsbeispiel als Elektromagnet ausgebildet, der mit einem Magnetanker zusammenwirkt. Die Stelleinheit 10 weist einen Spulenkörper 14 mit einer Magnetspule 11 auf. In einer zentrischen Ausnehmung des Spulenkörpers 14 ist eine zylindrische Hülse 12 eingesetzt, in der ein Magnetanker 13 verschiebbar eingesetzt ist. Die Hülse 12 kann aber auch entfallen und der Magnetanker kann direkt im Spulenkörper 14 verschiebbar gelagert sein. An dem Magnetanker 13 ist ein Führungsstift 19 beispielsweise durch Einpressen in eine Bohrung 22 befestigt. Das von dem Magentanker 13 abgewandte Ende des Führungsstiftes 19 ist in einer Bohrung 25 eines Magnetkerns 16 gleitverschiebbar gelagert. Der Magnetkern 16 ist wie der Magnetanker 13 in die Ausnehmung des Spulenkörpers 14 eingesetzt, jedoch ortsfest in dem Gehäuseteil 5 festgelegt. Der Magnetanker 13 stützt sich über ein Federelement 24 an dem Magnetkern 16 ab, welches in einer Bohrung 23 des Magnetankers 13 angeordnet ist. Zwischen Magentanker 13 und Magnetkern 16 befindet sich ein Ankerraum 51, in dem sich der Magnetanker 13 hin und her bewegen kann. Ein Magnetjoch 18 schließt den Magnetkreis zwischen dem Magnetkern 16 und der Magnetspule 11 auf der von dem Ventilkopf abgewandten Seite des Elektromagneten. Das Gehäuseteil 5 ist unterhalb des Magnetjochs 18 mittels eines auf das Gehäuseteil 5 aufrastbaren Deckelteils 6 und eines Dichtungsrings 28 dicht verschlossen. Auf der von dem Magnetjoch 18 abgewandten Seite des Elektromagneten ist über der Magnetspule 11 eine magnetische Rückschlussplatte 15 angeordnet, die an dem Spulenkörper 14 festgelegt ist und eine Ausnehmung aufweist, die der Magnetanker 13 durchdringt. Unter der Rückschlussplatte 15 ist ein Dichtungsring (O-Ring) als Dichtungselement 17 zwischen die Hülse 12 und den Magnetanker 13 eingesetzt, so dass kein Motoröl in den Ankerraum 51 eindringen kann. Es ist aber auch möglich, anstelle des O-Rings eine weitere Membran zur Abdichtung zu verwenden. Bei Wegfall der Hülse 12 kann der Dichtungsring oder die weitere Membran auch dichtend zwischen den Spulenkörper 14 und den Magnetanker eingesetzt werden. Die weitere Membran kann dann beispielsweise mit einem Ende an dem Spulenkörper und mit dem anderen Ende am Magnetanker festgelegt werden. Elektrische Anschlusselemente 27 der Magnetspule 11 sind seitlich aus dem Gehäuseteil 5 zu einem elektrischen Anschlussteil 7 des Schubumluftventils 1 herausgeführt.

Der Magnetanker 13 ist fest mit einer Ventilstange 20 verbunden, die in einem Ventilraum 50 angeordnet ist. Insbesondere ist es möglich, die Ventilstange einstückig mit dem Magnetanker auszubilden. Die von dem Elektromagneten abgewandte Seite der Ventilstange 20 ist in den Ventilkopf 30 eingepresst oder damit verschweißt. Das Ventilschließglied 40 dichtet den Ventilraum 50 gegenüber der taschenartigen Ausnehmung 26 ab. Weiterhin weist das Ventilschließglied 40 eine umlaufende Dichtlippe 45 auf, die bei geschlossenem Schubumluftventil an einem eine Durchgangsöffnung 31 von der taschenartigen Ausnehmung 26 zum druckseitigen Anschluss 3 umgebenden Innenbereich der taschenartigen Ausnehmung 26 zur Anlage gelangt, so dass die Öffnung 31 abgedichtet wird und keine Verbindung zwischen dem druckseitigen Anschluss 3 und dem ansaugseitigen Anschluss 2 besteht.

Wird die Magnetspule 11 mit einem Strom beaufschlagt, so wird der Magentanker 13 von der Magnetspule entgegen der Kraft des Federelementes 24 angezogen. Durch die Bewegung des Magnetankers wird die Ventilstange und der damit verbundene Ventilkopf in Richtung des Elektromagneten bewegt, so dass das mit dem Ventilkopf 30 verbundene Ventilschließglied 40 mit der Dichtlippe 45 die Öffnung 31 freigibt und Luft von dem druckseitigen Anschluss 3 in die taschenartige Ausnehmung 26 und von dort über die Öffnung 21 zum ansaugseitigen Anschluss 2 gelangen kann. Bei abgeschalteter Magnetspule 11 bewegt das Federelement 24 den Magnetanker in die Ausgangslage zurück, so dass die Dichtlippe 45 die Öffnung 31 abdichtet und die Verbindung vom druckseitigen Anschluss 3 zum ansaugseitigen Anschluss 2 unterbrochen ist.

In dem Ventilkopf 30 ist wenigstens ein Druckausgleichskanal 35 angeordnet. Der Druckausgleichskanal 35 weist eine sich zur Druckseite 8 hin öffnende erste Öffnung 36 und an seinem anderen Ende nach einer Gabelung zwei sich zu dem Ventilraum 51 hin öffnende Öffnungen 37 auf. Durch den Druckausgleichskanal 35 findet ein Druckausgleich zwischen dem Druck im Ventilraum 50 und dem Druck am druckseitigen Anschluss 3 statt.

Die dem druckseitigen Anschluss 3 zugewandten Stirnseite 32 des Ventilkopfes 30 weist erfindungsgemäß ein Podest 33 auf, das von dem Druckausgleichskanal 35 durchdrungen wird. Das Podest kann beispielsweise in Form eines zentrischen, von der Stirnseite abstehenden zylindrischen Stutzens gebildet sein. Die druckseitige Öffnung 36 des Druckausgleichkanals 35 befindet sich an dem von dem Ventilkopf 30 abgewandten Ende des Podestes 33 und ist daher von der Stirnseite 32 des Ventilkopfes beabstandet. Motoröl, das über die Kurbelwellengehäuseentlüftung in den Ansaugtrakt der nicht dargestellten Brennkraftmaschine gelangt, lagert sich im geschlossenen Zustand des Schubumluftventils auf der dem druckseitigen Anschluss 3 zugewandten Stirnseite 32 in dem kreisringförmigen Bereich zwischen der umlaufenden Dichtlippe 45 und dem Podest 33 ab, und kann von dort aus nicht in den Druckausgleichskanal eindringen. Beim Öffnen des Schubumluftventils wird das Motoröl durch die dann über die Stirnseite 32 strömende Luft vorteilhaft in den Bypasskanal 65 ausgespült. Das an der Stirnseite 32 des Ventilkopfes maximal aufnehmbare Ölvolumen und die Höhe des Podestes 33 können so bemessen werden, dass bei minimaler Öffnungsfrequenz des Schubumluftventils genügend Öl aufgenommen werden kann. Sollte jedoch trotzdem Motoröl über den Druckausgleichskanal 35 in den Ventilraum 50 eindringen, so kann dieses trotzdem nicht in den gegenüber dem Ventilraum abgedichteten Ankerraum 51 gelangen.

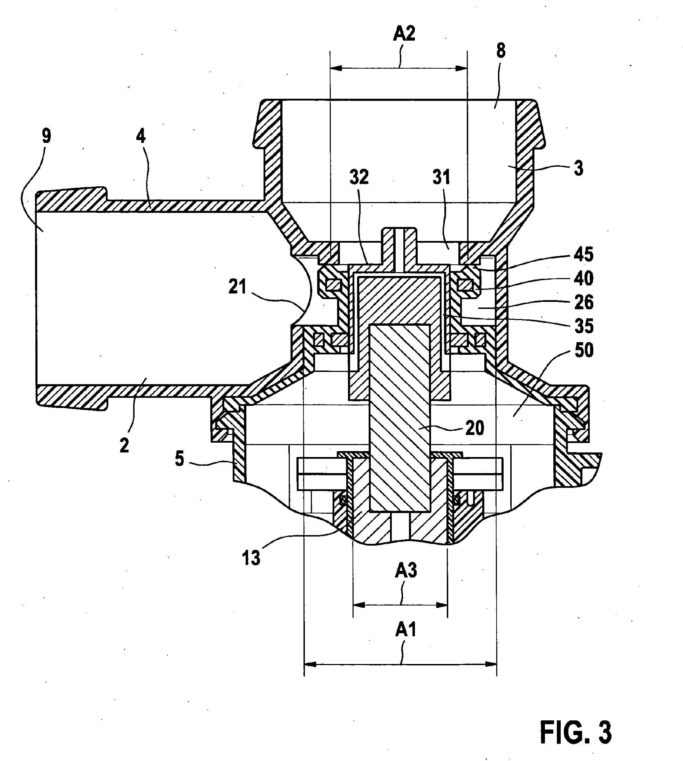

Da zwischen dem Ankerraum 51 auf der von der Ventilstange 20 abgewandte Seite des Magnetankers 13 und dem druckseitigen Anschluss 3 kein Druckausgleich erfolgt, kann es vorteilhaft sein, wie in Fig. 3 dargestellt ist, das Ventilschließglied geometrisch so auszugestalten, dass im geschlossenen Zustand des Schubumluftventils dennoch ein Kräftegleichgewicht besteht. Dies kann einfach erreicht werden, wenn die durch die Dichtlippe 45 des Ventilschließgliedes 40 begrenzte Fläche A2 gleich der Differenz aus der nicht an der Innenwand des Ventilteils 4 anliegenden, dem Druck im Ventilraum 50 ausgesetzten und daher zwischen Ventilraum 50 und Ausnehmung 26 beweglichen Fläche A1 des Ventilschließgliedes 40 und der Querschnittsfläche A3 des Magnetankers 13 in einer Querschnittsebene senkrecht zur Bewegungsrichtung des Magnetankers ist. In Fig. 3 ist dann die Bedingung A2 = A 1 - A3 bis auf Fertigungstoleranzen erfüllt.

## Patentansprüche

1. Schubumluftventil für Turbolador-Brennkraftmaschinen zur Verbindung der Ansaugscite mit der Druckseite eines Verdichterteils des Turboladers, mit einem ersten Anschluss und einemzweiten, druckseitigen Anschluss (3), die mittels eines Ventilschließgliedes (40) miteinander verbindbar sind, und mit einer mittels einer Stelleinheit (10) verschiebbaren Ventilstange (20), die auf einen mit dem Ventilschließglied (40) zusammenwirkenden beweglichen Ventilkopf (30) einwirkt, der mit wenigstens einem Druckausgleichskanal (35) versehen ist, wobei die der Druckseite (8) zugewandte Stirnseite (32) des beweglichen Ventilkopfes (30) mit einem zur Druckscite hin vorstchenden Podest (33) versehen ist und der wenigstens eine Druckausgleichskanal (35) sich durch das Podest (33) hindurch zur Druckseite hin öffnet, **dadurch gekennzeichnet, dass** der erste Anschluss (2) ein ansaugseitiger Anschluss ist und dass der ansaugseitige Anschluss über eine Öffnung (21) mit einer taschenartigen Ausnehmung (26) , in der der bewegliche Ventilkopf (30) angeordnet ist, verbunden ist, und dass ein das Podest (33) umgebender Bereich der Stirnseite (32) des beweglichen Ventilkopfes (30) zwischen dem wenigstens einen Podest (33) und einer Dichtlippe (45) des Ventilschließgliedes (40) als Aufnahme für Ölablagerungen vorgesehen ist und die Dichtlippe (45) beigeschlossenem Schubumluftventil an einem eine Durchgangsöffnung (31) von der taschenartigen Ausnehmung (26) zum druckseitigen Anschluss (3) umgebenden Innenbereich der taschenartigen Ausnehmung (26) zur Anlage gelangt, so dass die Öffnung (31) abgedichtet wird.

2. Schubumluftventil nach Anspruch 1, **dadurch gekennzeichnet, dass** das Ventilschließglied (40) durch eine Membran gebildet wird, die mit ihrem einen Ende (41) zwischen einem Gehäuseteil (5) und einem den ansaugseitigen Anschluss (2) und druckseitigen Anschluss (3) aufweisenden Ventilteil (4) des Schubumluftventils (1) festgelegt ist und mit ihrem anderen Ende an dem Ventilkopf (30) festgelegt ist.

3. Schubumluftventil nach einem der Ansprüche 1 bis 2, **dadurch gekennzeichnet, dass** der wenigstens eine Druckausgleichskanal (35) sich von einer in dem Podest (33) angeordneten druckseitigen Öffnung (36) bis zu einer Öffnung (37) in einem zwischen dem Ventilschließglied (40) und der Stelleinheit (10) angeordneten Ventilraum (50) erstreckt.

4. Schubumluftventil nach Anspruch 3, **dadurch gekennzeichnet, dass** die Stelleinheit (10) eine Magnetspule (11), die mit einem mit der Ventilstange (20) verbundenen oder einstückig mit der Ventilstange ausgebildeten, beweglichen Magnetanker (13) zusammenwirkt, und einen ortsfesten Magnetkern (16) aufweist und dass der Ventilraum (50) durch ein Dichtungselement (17) gegenüber einem auf der von der Ventilstange (20) abgewandten und dem Magnetkern zugewandten Seite des Magnetankers (13) angeordneten Ankerraum (51) abgedichtet ist.

5. Schubumluftventil nach Anspruch 4, **dadurch gekennzeichnet, dass** das Dichtungselement (17) durch einen Dichtungsring oder eine weitere Membran gebildet wird, die insbesondere zwischen einen Spulenkörper (14) der Magnetspule (11) und den Magentanker (13) eingesetzt ist.

6. Schubumluftventil nach Anspruch 4, **dadurch gekennzeichnet, dass** der Magnetanker (13) in einer von der Magnetspule umgebenen Hülse (12) verschiebbar gelagert ist.

7. Schubumluftventil nach Anspruch 6, **dadurch gekennzeichnet, dass** das Dichtungselement (17) durch einen zwischen Hülse (12) und Magnetanker (13) befindlichen Dichtungsring oder eine weitere Membran gebildet wird.

8. Schubumluftventil nach einem der Ansprüche 2 bis 7, **dadurch gekennzeichnet, dass** das als Membran ausgebildete Ventilschließglied (40) so ausgebildet ist, dass
- die durch eine Dichtlippe (45) des Ventilschließgliedes begrenzte Fläche A2,
- die Querschnittsfläche A3 des Magnetankers in einer Querschnittsebene senkrecht zur Bewegungsrichtung des Magnetankers und
- die von dem Druck in dem Ventilraum (50) auf der von dem druckseitigen Anschluss (8) abgewandten Seite beaufschlagte Fläche A1 des Ventilschließgliedes (40)
bis auf Fertigungstoleranzen die Bedingung A2 = A1 - A3 erfüllen.

9. Schubumluftventil nach Anspruch 4 **dadurch gekennzeichnet, dass** der Magnetanker (13) und/oder die Ventilstange (20) mit einem Führungsstift (19) fest verbunden ist, der in einer Ausnehmung (25) des Magnetkerns (16) verschiebbar gelagert ist.

## Claims

1. Overrun air recirculation valve for turbocharged internal combustion engines for connecting the suction side to the pressure side of a compressor part of the turbocharger, having a first port and having a second, pressure side port (3), which ports can be connected to one another by means of a valve closing member (40), and having a valve rod (20) which can be moved by means of an actuating unit (10) and acts on a movable valve head (30) which interacts with the valve closing member (40) and has at least one pressure-equalizing duct (35), with that end side (32) of the movable valve head (30) which faces towards the pressure side (8) having a podium (33) which projects towards the pressure side, and with the at least one pressure-equalizing duct (35) opening in the direction of the pressure side through the podium (33), **characterized in that** the first port (2) is a suction-side port, **in that** the suction-side port is connected via an opening (21) to a pocket-like recess (26) in which the movable valve head (30) is arranged, and **in that** a region, which surrounds the podium (33), of the end side (32) of the movable valve head (30) between the at least one podium (33) and a sealing lip (45) of the valve closing member (45) is provided as a receptacle for oil depositions, and when the overrun air recirculation valve is closed, the sealing lip (45) abuts against an inner region, which surrounds a passage opening (31) from the pocket-like recess (26) to the pressure-side port (3), of the pocket-like recess (26), such that the opening (31) is sealed off.

2. Overrun air recirculation valve according to Claim 1, **characterized in that** the valve closing member (40) is formed by a diaphragm which is fixed with one end (41) thereof between a housing part (5) and a valve part (4) which has the suction-side port (2) and pressure-side port (3), and with the other end thereof to the valve head (30).

3. Overrun air recirculation valve according to one of Claims 1 to 2, **characterized in that** the at least one pressure-equalizing duct (35) extends from a pressure-side opening (36), which is arranged in the podium (33), to an opening (37) in a valve chamber (50) arranged between the valve closing member (40) and the actuating unit (10).

4. Overrun air recirculation valve according to Claim 3, **characterized in that** the actuating unit (10) has a magnet coil (11), which interacts with a movable magnet armature (13) connected to the valve rod (20) or formed in one piece with the valve rod, and a positionally fixed magnet core (16), and **in that** the valve chamber (50) is sealed off, by means of a seal element (17), with respect to an armature chamber (51) arranged on that side of the magnet armature (13) which faces away from the valve rod (20) and faces towards the magnet core.

5. Overrun air recirculation valve according to Claim 4, **characterized in that** the seal element (17) is formed by a seal ring or a further diaphragm which is in particular inserted between a coil body (14) of the magnet coil (11) and the magnet armature (13).

6. Overrun air recirculation valve according to Claim 4, **characterized in that** the magnet armature (13) is movably mounted in a sleeve (12) which is surrounded by the magnet coil.

7. Overrun air recirculation valve according to Claim 6, **characterized in that** the seal element (17) is formed by a seal ring or a further diaphragm situated between the sleeve (12) and magnet armature (13).

8. Overrun air recirculation valve according to one of Claims 2 to 7, **characterized in that** the valve closing member (40) which is formed as a diaphragm is designed such that
- the area A2 delimited by a sealing lip (45) of the valve closing member,
- the cross-sectional area A3 of the magnet armature in a cross-sectional plane perpendicular to the movement direction of the magnet armature, and
- that area A1 of the valve closing member (40) which is acted on by the pressure in the valve chamber (50) on the side facing away from the pressure-side port (8) satisfy, aside from production tolerances, the condition A2 = A1 - A3.

9. Overrun air recirculation valve according to Claim 4, **characterized in that** the magnet armature (13) and/or the valve rod (20) is fixedly connected to a guide pin (19) which is movably mounted in a recess (25) of the magnet core (16).

## Revendications

1. Soupape à air ambiant pour moteurs à combustion interne à turbocompresseur destinée à connecter le côté aspiration au côté pression d'une partie compresseur du turbocompresseur, comprenant un premier raccord et un deuxième raccord du côté pression (3), lesquels peuvent être connectés l'un à l'autre au moyen d'un organe de fermeture de soupape (40), et comprenant une tige de soupape (20) pouvant être déplacée au moyen d'une unité d'actionneur (10), laquelle tige de soupape agit sur une tête de soupape mobile (30) coopérant avec l'organe de fermeture de soupape (40), qui est pourvue d'au moins un canal d'équilibrage de la pression (35), le côté frontal (32) de la tête de soupape mobile (30) tourné vers le côté pression (8) étant pourvu d'un support (33) saillant vers le côté pression et l'au moins un canal d'équilibrage de la pression (35) s'ouvrant à travers le support (33) vers les côté pression, **caractérisée en ce que** le premier raccord (2) est un raccord du côté aspiration et **en ce que** le raccord du côté aspiration est connecté par le biais d'une ouverture (21) à un évidement (26) en forme de cavité dans lequel est disposée la tête de soupape mobile (30), et **en ce qu'**une région du côté frontal (32) de la tête de soupape mobile (30) entourant le support (33) est prévue entre l'au moins un support (33) et une lèvre d'étanchéité (45) de l'organe de fermeture de soupape (40) en tant que réception pour des accumulations d'huile et la lèvre d'étanchéité (45), lorsque la soupape d'air ambiant est fermée, venant en appui contre une région interne de l'évidement en forme de cavité (26) entourant une ouverture de passage (31) de l'évidement en forme de cavité (26) au raccord du côté pression (3), de sorte que l'ouverture (31) soit étanchéifiée.

2. Soupape à air ambiant selon la revendication 1, **caractérisée en ce que** l'organe de fermeture de soupape (40) est formé par une membrane qui est fixée avec l'une de ses extrémités (41) entre une partie de boîtier (5) et une partie de soupape (4) de la soupape à air ambiant (1) présentant le raccord (2) du côté aspiration et le raccord (3) du côté pression et est fixée avec son autre extrémité sur la tête de soupape (30).

3. Soupape à air ambiant selon l'une quelconque des revendications 1 à 2, **caractérisée en ce que** l'au moins un canal d'équilibrage de la pression (35) s'étend depuis une ouverture (36) du côté pression disposée dans le support (33) jusqu'à une ouverture (37) dans un espace de soupape (50) disposé entre l'organe de fermeture de soupape (40) et l'unité d'actionneur (10).

4. Soupape à air ambiant selon la revendication 3, **caractérisée en ce que** l'unité d'actionneur (10) présente une bobine magnétique (11) qui coopère avec un induit magnétique (13) mobile réalisé d'une seule pièce avec la tige de soupape ou connecté à la tige de soupape (20), et un noyau magnétique fixe (16) et **en ce que** l'espace de soupape (50) est étanchéifié par un élément d'étanchéité (17) par rapport à un espace d'induit (51) disposé du côté de l'induit magnétique (13) tourné vers le noyau magnétique et opposé à la tige de soupape (20).

5. Soupape à air ambiant selon la revendication 4, **caractérisée en ce que** l'élément d'étanchéité (17) est formé par une bague d'étanchéité ou une autre membrane qui est insérée notamment entre un corps de bobine (14) de la bobine magnétique (11) et l'induit magnétique (13).

6. Soupape à air ambiant selon la revendication 4, **caractérisée en ce que** l'induit magnétique (13) est monté de manière déplaçable dans un manchon (12) entourant la bobine magnétique.

7. Soupape à air ambiant selon la revendication 6, **caractérisée en ce que** l'élément d'étanchéité (17) est formé par une bague d'étanchéité située entre le manchon (12) et l'induit magnétique (13) ou par une autre membrane.

8. Soupape à air ambiant selon l'une quelconque des revendications 2 à 7, **caractérisée en ce que** l'organe de fermeture de soupape (40) réalisé sous forme de membrane est réalisé de telle sorte
- que la surface A2 limitée par une lèvre d'étanchéité (45) de l'organe de fermeture de soupape,
- que la surface en section transversale A3 de l'induit magnétique dans un plan en coupe transversale perpendiculairement à la direction de déplacement de l'induit magnétique et
- que la surface A1 de l'organe de fermeture de soupape (40) sollicitée par la pression dans l'espace de soupape (50) du côté opposé au raccord du côté pression (8)
satisfassent la condition A2=A1-A3, en tenant compte de tolérances de fabrication.

9. Soupape à air ambiant selon la revendication 4, **caractérisée en ce que** l'induit magnétique (13) et/ou la tige de soupape (20) est/sont connecté(s) fixement à une goupille de guidage (19) qui est montée de manière déplaçable dans un évidement (25) du noyau magnétique (16).
